# EUROPÄISCHE PATENTANMELDUNG

(11) **EP 1 262 291 A1**
(43) Veröffentlichungstag der Anmeldung: **04.12.2002**
(21) Anmeldenummer: 02006319.4
(22) Anmeldetag: 21.03.2002
(51) Int. Cl.: B27K 3/34, B05D 1/02

(54) **Verfahren zur antimikrobiellen Ausrüstung poröser Materialien**

(30) Priorität: 08.05.2001 DE 10122149
(71) Anmelder: Creavis Gesellschaft für Technologie und Innovation mbH, 45764 Marl (DE)
(72) Erfinder: Ottersbach, Peter, Dr., 51570 Windeck (DE); Sosna, Friedrich, Dr., 46286 Dorsten (DE); Schmidt, Friedrich Georg, Dr., 45721 Haltern (DE); Heidlas, Jürgen, Dr., 83308 Trostberg (DE)

(57) **Zusammenfassung**

Die Erfindung betrifft ein Verfahren antimikrobiellen Ausrüstung poröser Materialien durch Imprägnierung mit antimikrobiellen Polymeren unter Verwendung überkritischer Medien.

## Beschreibung

Die Erfindung betrifft ein Verfahren zur antimikrobiellen Ausrüstung poröser Materialien durch Imprägnierung mit antimikrobiellen Polymeren.

Poröse Materialien, wie z.B. Holz oder Natursteine, bilden aufgrund ihrer großen Oberfläche nahezu ideale Bedingungen für einen mikrobiellen Befall. Dieser Befall führt neben einem getrübten optischen Erscheinungsbild auch zu mechanischen Defekten des Materials, was sich im extremen Fall bis zu ihrer vollständigen Zerstörung ausweiten kann. Ein derartiger mikrobieller Zersetzungsprozeß wird auch als Biokorrosion bezeichnet. Eine herausragende Rolle spielen hierbei Schimmelpilze, wie z.B. Aspergilus niger. Sie dringen in die Poren der Materialien, seien es z.B. Beton, Sandstein, Hölzer oder sogar Gläser, ein und verursachen durch ihren Stoffwechsel einen schleichenden Zerfall der betroffenen Oberflächen. Daneben können die freiwerdenden Stoffwechselprodukte auch zu gesundheitlichen Beeinträchtigungen führen, die sich entweder akut toxisch oder auch chronisch in Form von Allergisierungen manifestieren können.
Besonderen Beanspruchungen unterliegen dabei naturgemäß poröse Materialien, die im Außenbereich Verwendung finden. Diese sind Temperatur- und Feuchtigkeitseinflüssen, und dem damit verbundenen Bewuchsdruck, unmittelbar ausgeliefert. Beispiele für derartige Anwendungen sind Holzbauten, wie z. B. Holzhäuser, Garten- und Geräteschuppen, Bahnschwellen, Holzschaukeln, Parkbänke und Holzbrücken.

Bisher begegnet man dem Problem Biokorrosion im Prinzip durch zwei Lösungsansätze.

Zum Einen wird eine Schutzschicht aus hydrophoben Beschichtungen auf die Flächen aufgetragen, um Wasser und Mikroben von der Oberfläche abzuhalten. Dieser Ansatz bewährt sich allerdings nur kurzzeitig, da die Mikroben Wege finden, sich auch an hydrophobe Oberflächen anzuheften. In der Folge werden die Beschichtungen beschädigt, so dass ein mikrobieller Angriff durch die Schutzschicht hindurch erfolgen kann, letztlich resultierend in einer partiellen Ablösung der betroffenen Stellen.
Der zweite Lösungsansatz besteht in einer massiven Verwendung niedermolekularer Biozide, die, zumeist als Additiv in Lacken, auf die zu schützenden Oberflächen aufgetragen werden. Da ein einziger Regenguss hierbei schon oft mehr als die Hälfte der aktiven Substanzen herausspült, wird diese Art des Oberflächenschutzes im Allgemeinen nur für Innenraumflächen, wie sie z.B. an Freseken, Skulpturen und Gemälden zu finden sind, angewandt. Als Alternative für Außenanwendungen hat sich auch die Kesseldruckimprägnierung etabliert, bei der durch Anlegen eines äußeren Drucks biozide Komponenten in das Material eingebracht werden.

Ein schwerwiegender Nachteil dieses Lösungsansatzes ist allerdings die Giftigkeit der bioziden Substanzen.

US 5 094 892 offenbart ein Verfahren, bei dem Holzschutzmittel durch ein überkritisches Lösungsmittel wie CO₂ in Verbindung mit einem Co-Solvenz in Hölzer eingebracht werden kann. Es wird ein Gemisch aus dem Solvenz und dem Co-Solvenz gebildet, das dann das Holzschutzmittel aufnimmt. Dieses Gemisch wird anschließend unter überkritischen Bedingungen zur Imprägnierung des Holz eingesetzt.

Dieses Verfahren ist besonders für Holzschutzmittel geeignet, die in dem überkritischen Lösungsmittel selbst nicht ausreichend löslich sind. Außer einer Kupferverbindung ist kein Holzschutzmittel aufgeführt; Kupferverbindungen sind ökologisch sehr bedenklich.

Aus einem anderen technischen Gebiet, der europäischen Patentanmeldung 0 862 858 ist bekannt, daß Copolymere von tert.-Butylaminoethylmethacrylat, einem Methacrylsäureester mit sekundärer Aminofunktion, inhärent mikrobizide Eigenschaften besitzen. Die antimikrobielle Wirksamkeit dieser polymeren Systeme ist eng mit ihrer dreidimensionalen Struktur, Konformation und verfügbaren Oberfläche verbunden. Sie eignen sich vor allem in Anwendungsbereichen, in denen es auf einen langanhaltenden, oberflächenaktiven Schutz vor mikrobiellem Angriff ankommt.

Die deutsche Patentanmeldung 10 062 201.1 setzt auf der Idee zur Verwendung antimikrobieller Polymere auf, und beschreibt den Einsatz dieser Polymere im Bauten- und Denkmalschutz. Ein Mangel dieses Verfahrens ist die unzureichende Penetrationstiefe der antimikrobiellen Polymere innerhalb der behandelten Materialien, wodurch z.B. mechanische Beschädigungen der Oberfläche zu einer Zerstörung des Materialschutzes führen können.

Der vorliegenden Erfindung liegt daher die Aufgabe zugrunde, Wege aufzuzeigen, wie poröse Materialien mit antimikrobiellen Polymeren imprägniert werden können, ohne den beschriebenen Nachteil einer zu geringen Penetrationstiefe in Kauf nehmen zu müssen.

Es wurde nun überraschend gefunden, dass sich die beschriebene Aufgabe durch ein Verfahren lösen läßt, welches in der Lage ist, antimikrobielle Polymere in Kombination mit überkritischen Medien effizient in die Matrix poröser Materialien einzutragen.

Gegenstand der vorliegenden Erfindung ist daher ein Verfahren zur antimikrobiellen Imprägnierung poröser Materialien durch antimikrobielle Polymere, wobei eine Lösung oder Dispersion eines antimikrobiellen Polymers auf das poröse Material aufgebracht und anschließend mit einem überkritischen Medium in das poröse Material eingebracht wird.

Im erfindungsgemäßen Verfahren wird das antimikrobielle Polymer z. B. in einem organischen Lösemittel gelöst oder z. B. in einem wässrigen Lösemittel dispergiert, und auf die poröse Oberfläche des zu behandelnden Materials aufgetragen. Als Lösemittel kommen Alkohole wie Ethanol, Methanol, Propanol, Isopropanol, Acetate wie Ethylacetat, Butylacetat, Ketone wie Aceton, Methylethylketon, Aromaten wie Toluol, Xylol, als Dispergiermittel Emulgatoren wie Polyethylenglykolderivate in Frage. Dies kann z.B. durch Bestreichen, Besprühen oder Einlegen des Substrates in eine entsprechende Lösung erfolgen. Im Anschluß daran wird das so vorbehandelte Material einem überkritischen Medium, wie z.B. überkritischem Kohlendioxid oder Propan ausgesetzt, welches das antimikrobielle Polymer tief in die Poren des Materials einträgt.

Die Lösung oder Dispersion des antimikrobiellen Polymers kann auf das poröse Material aufgebracht werden und auf diesem eintrocknen. Es ist auch möglich, das Lösungs- oder Dispersionsmittel z. B. durch Destillation zu entfernen.

Wird das überkritisches Medium CO₂ verwendet, so wird das Verfahren bevorzugt bei einem Druck von 50-500 bar, insbesondere 200-300 bar und einer Temperatur von 10 °C bis 150 °C, insbesondere 30 °C bis 80 °C durchgeführt.

Da die antimikrobielle Eigenschaft dem Polymer selber innewohnt, ist ein Auswaschen der aktiven Spezies prinzipbedingt ausgeschlossen. Darüber hinaus tragen antimikrobielle Polymere im Allgemeinen hydrophile Gruppen, die zu einer Quellung des Polymers im Wasserkontakt führen, so dass bei der für mikrobielle Angriffe erforderlichen Gegenwart von Feuchtigkeit eine Quellung des Polymers in den Poren des Substrates erfolgt, was letztlich zu einer vollständigen Abdichtung dieser Poren führt. Da die antimikrobiellen Polymere aufgrund ihrer polymeren Struktur bedeutend weniger giftig als niedermolekulare Biozide sind, ist auch eine ökologisch und toxikologisch unbedenkliche Verarbeitung dieser Substanzen zur Materialimprägnierung möglich.

Die so behandelten Materialien zeigen eine antimikrobielle Wirksamkeit die dauerhaft, und gegen Umwelteinflüsse und physikalische Beanspruchungen widerstandsfähig ist. Diese Beschichtungen enthalten keine niedermolekularen Biozide, was eine Migration ökologisch problematischer Stoffe über den gesamten Nutzungszeitraum hinweg effektiv ausschließt.

Bevorzugt werden zur Herstellung der antimikrobiellen Polymere Stickstoff- und Phosphorfunktionalisierte Monomere eingesetzt.

Besonders bevorzugte Monomere zur Herstellung der antimikrobiellen Polymere sind Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylaminopropylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammoniumchlorid, 2-Methacryloyloxyethyltrimethylammoniumchlorid, 2-Acryloyloxyethyl-4-benzoyldimethylammoniumbromid, 2-Methacryloyloxyethyl-4-benzoyldimethylammoniumbromid, Allyltriphenylphosphoniumbromid, Allyltriphenylphosphoniumchlorid, 2-Acrylamido-2-methyl-1-propansulfonsäure, 2-Diethylaminoethylvinylether und/oder 3-Aminopropylvinylether.

Neben dem überkritischen Medium kann noch ein weiteres Lösungsmittel eingesetzt werden, dass die Imprägnierung des porösen Materials mit dem antimikrobiellen Polymer erleichtert. Geeignete Lösungsmittel sind solche, in denen sich das Polymer gut löst, wie z. B. die bereits genannten Lösungsmittel.

Als poröse Materialien werden bevorzugt alle Baumaterialien wie z. B. Natur- oder Kunststein, Mineralien, Beton, Holz, Gips, Glas, Ton, Zement, Mörtel und/oder Keramik eingesetzt.

### Verwendung der modifizierten Substrate

Weitere Gegenstände der vorliegenden Erfindung sind die Verwendung der erfindungsgemäß antimikrobiell ausgerüsteten Oberflächen im Bau-, Bauten- und Denkmalschutz. Solche Oberflächen basieren vorzugsweise auf Baustoffen, wie z.B. Beton, Zement, Mörtel, Natur-und Kunststeinen, Mineralien, Tonen, Hölzern, Gläsern und Keramiken, die mit erfindungsgemäßen Polymeren imprägnierte Oberflächen aufweisen.

Zur weiteren Beschreibung der vorliegenden Erfindung werden die folgenden Beispiele gegeben, die die Erfindung weiter erläutern, nicht aber ihren Umfang begrenzen sollen, wie er in den Patentansprüchen dargelegt ist.

### Beispiel 1:

50 ml Dimethylaminopropylmethacrylamid (Fa. Aldrich) und 250 ml Ethanol werden in einem Dreihalskolben vorgelegt und unter Argonzustrom auf 65 °C erhitzt. Danach werden 0,6 g Azobisisobutyronitril gelöst in 20 ml Ethylmethylketon unter Rühren langsam zugetropft. Das Gemisch wird auf 70 °C erhitzt und 72 Stunden bei dieser Temperatur gerührt. Nach Ablauf dieser Zeit wird die Reaktionsmischung in 1,5 l VE-Wasser eingerührt, wobei das polymere Produkt ausfällt. Nach Abfiltrieren des Produktes wird der Filterrückstand mit 100 ml einer Mischung aus Ethanol/VE-Wasser im Verhältnis 1:1 gespült, um noch vorhandene Restmonomere zu entfernen. Im Anschluß wird das Produkt für 24 Stunden bei 50 °C im Vakuum getrocknet.

Ein Fichtenholzstück der Größe 40 mal 40 mal 300 mm wird in einen Liter einer Lösung aus 5 Gewichtsprozent des polymeren Produktes und 95 Gewichtsprozent Ethanol bei Raumtemperatur für die Dauer von einer Stunde getaucht. Dieses so vorbehandelte Holzstück wird dann in einen Autoklaven gebracht. Bei 40 °C wird überkritisches Kohlendioxd bis 250 bar aufgedrückt, wobei diese Bedingungen für eine Stunde aufrecht erhalten werden. Nach der Entspannung des Systems wird das Holzstück aus dem Autoklaven entnommen und bei 30 °C und 50 mbar Druck für die Dauer von zwei Tagen getrocknet.

### Beispiel 1a:

Auf das Holzstück aus Beispiel 1 wird ein Tropfen einer Keimsuspension von Staphylococcus aureus gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit sind keine Keime von Staphylococcus aureus mehr nachweisbar.

### Beispiel 1b:

Auf das Holzstück aus Beispiel 1 wird ein Tropfen einer Keimsuspension von Pseudomonas aeruginosa gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit sind keine Keime von von Pseudomonas aeruginosa mehr nachweisbar.

### Beispiel 1c:

Je ein imprägniertes Holzstück aus Beispiel 1 wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben ist bei keinem der imprägnierten Holzstücke ein Bewuchs feststellbar.

### Beispiel 2:

50 ml tert.-Butylaminoethylmethacrylat (Fa. Aldrich) und 250 ml Ethanol werden in einem Dreihalskolben vorgelegt und unter Argonzustrom auf 65 °C erhitzt. Danach werden 0,6 g Azobisisobutyronitril gelöst in 20 ml Ethylmethylketon unter Rühren langsam zugetropft. Das Gemisch wird auf 70 °C erhitzt und 72 Stunden bei dieser Temperatur gerührt. Nach Ablauf dieser Zeit wird die Reaktionsmischung in 1,5 l VE-Wasser eingerührt, wobei das polymere Produkt ausfällt. Nach Abfiltrieren des Produktes wird der Filterrückstand mit 100 ml einer Mischung aus Ethanol/VE-Wasser im Verhältnis 1:1 gespült, um noch vorhandene Restmonomere zu entfernen. Im Anschluß wird das Produkt für 24 Stunden bei 50 °C im Vakuum getrocknet.

Ein Fichtenholzstück der Größe 40 mal 40 mal 300 mm wird in einen Liter einer Lösung aus 5 Gewichtsprozent des polymeren Produktes und 95 Gewichtsprozent Ethanol bei Raumtemperatur für die Dauer von einer Stunde getaucht. Dieses so vorbehandelte Holzstück wird dann in einen Autoklaven gebracht. Bei 40 °C wird überkritisches Kohlendioxd bis 250 bar aufgedrückt, wobei diese Bedingungen für eine Stunde aufrecht erhalten werden. Nach der Entspannung des Systems wird das Holzstück aus dem Autoklaven entnommen und bei 30 °C und 50 mbar Druck für die Dauer von zwei Tagen getrocknet.

### Beispiel 2a:

Auf das Holzstück aus Beispiel 2 wird ein Tropfen einer Keimsuspension von Staphylococcus aureus gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit sind keine Keime von Staphylococcus aureus mehr nachweisbar.

### Beispiel 2b:

Auf das Holzstück aus Beispiel 2 wird ein Tropfen einer Keimsuspension von Pseudomonas aeruginosa gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit sind keine Keime von von Pseudomonas aeruginosa mehr nachweisbar.

### Beispiel 2c:

Je ein imprägniertes Holzstück aus Beispiel 2 wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben ist bei keinem der imprägnierten Holzstücke ein Bewuchs feststellbar.

### Beispiel 3:

20 ml tert.-Butylaminoethylmethacrylat (Fa. Aldrich) und 0,2 g Azobisisobutyronitril werden in eine Glasampulle gegeben. Die Ampulle wird verschlossen und für die Dauer von 6 Stunden in ein 70 °C heißes Wasserbad gelegt. Nach Ablauf dieser Zeit wird die Ampulle entnommen, und nach Abkühlung auf Raumtemperatur geöffnet. Das polymere Produkt wird entnommen und gemörsert.

Ein Fichtenholzstück der Größe 10 mal 10 mal 80 mm wird in einen Autoklaven mit einem Volumen von einem Liter gelegt. Dann wird eine Lösung aus 5 Gewichtsprozent des polymeren Produktes und 95 Gewichtsprozent Ethanol in den Autoklaven gegeben, bis dieser zu 2/3 des Volumens aufgefüllt ist. Der Autoklave wird verschlossen und es wird bei 40 °C wird überkritisches Kohlendioxd bis 250 bar aufgedrückt, wobei diese Bedingungen für eine Stunde aufrecht erhalten werden. Nach der Entspannung des Systems wird das Holzstück aus dem Autoklaven entnommen und bei 30 °C und 50 mbar Druck für die Dauer von zwei Tagen getrocknet.

### Beispiel 3a:

Auf das Holzstück aus Beispiel 3 wird ein Tropfen einer Keimsuspension von Staphylococcus aureus gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit sind keine Keime von Staphylococcus aureus mehr nachweisbar.

### Beispiel 3b:

Auf das Holzstück aus Beispiel 3 wird ein Tropfen einer Keimsuspension von Pseudomonas aeruginosa gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit sind keine Keime von von Pseudomonas aeruginosa mehr nachweisbar.

### Beispiel 3c:

Je ein imprägniertes Holzstück aus Beispiel 3 wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben ist bei keinem der imprägnierten Holzstücke ein Bewuchs feststellbar.

### Beispiel 4:

20 ml tert.-Butylaminoethylmethacrylat (Fa. Aldrich) und 0,2 g Azobisisobutyronitril werden in eine Glasampulle gegeben. Die Ampulle wird verschlossen und für die Dauer von 6 Stunden in ein 70 °C heißes Wasserbad gelegt. Nach Ablauf dieser Zeit wird die Ampulle entnommen, und nach Abkühlung auf Raumtemperatur geöffnet. Das polymere Produkt wird entnommen und gemörsert.

Ein Sandstein der Größe 10 mal 10 mal 80 mm wird in einen Autoklaven mit einem Volumen von einem Liter gelegt. Dann wird eine Lösung aus 5 Gewichtsprozent des polymeren Produktes und 95 Gewichtsprozent Ethanol in den Autoklaven gegeben, bis dieser zu 2/3 des Volumens aufgefüllt ist. Der Autoklave wird verschlossen und es wird bei 40 °C wird überkritisches Kohlendioxd bis 250 bar aufgedrückt, wobei diese Bedingungen für eine Stunde aufrecht erhalten werden. Nach der Entspannung des Systems wird der Sandstein aus dem Autoklaven entnommen und bei 30 °C und 50 mbar Druck für die Dauer von zwei Tagen getrocknet.

### Beispiel 4a:

Auf den Sandstein aus Beispiel 4 wird ein Tropfen einer Keimsuspension von Staphylococcus aureus gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit sind keine Keime von Staphylococcus aureus mehr nachweisbar.

### Beispiel 4b:

Auf den Sandstein aus Beispiel 4 wird ein Tropfen einer Keimsuspension von Pseudomonas aeruginosa gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit sind keine Keime von von Pseudomonas aeruginosa mehr nachweisbar.

### Beispiel 4c:

Je ein imprägnierter Sandstein aus Beispiel 4 wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben ist bei keinem der imprägnierten Sandsteine ein Bewuchs feststellbar.

## Patentansprüche

1. Verfahren zur antimikrobiellen Imprägnierung poröser Materialien durch antimikrobielle Polymere,
**dadurch gekennzeichnet,**
**dass** eine Lösung oder Dispersion eines antimikrobiellen Polymers auf das poröse Material aufgebracht und anschließend mit einem überkritischen Medium in das poröse Material eingebracht wird.

2. Verfahren nach Anspruch 1,
**dadurch gekennzeichnet,**
**dass** zusätzlich zum überkritischen Medium noch ein weiteres Lösemittel verwendet wird.

3. Verfahren nach einem der Ansprüche 1 oder 2,
**dadurch gekennzeichnet,**
**dass** die Lösung oder Dispersion des antimikrobiellen Polymers auf dem porösen Material eintrocknet oder das Lösungsmittel oder Dispersionsmittel entfernt wird.

4. Verfahren nach einem der Ansprüche 1 bis 3,
**dadurch gekennzeichnet,**
**dass** es sich bei den porösen Materialien um Natur- oder Kunststein, Mineralien, Beton, Holz, Gips, Glas, Ton, Zement, Mörtel und/oder Keramik, jeweils verarbeitet oder unverarbeit, handelt.

5. Verfahren nach einem der Ansprüchel bis 4,
**dadurch gekennzeichnet,**
**dass** die antimikrobiellen Polymere aus mindestens einem Stickstoff- oder Phosphorfunktionalisierten Monomeren hergestellt werden.

6. Verfahren nach einem der Ansprüche 1 bis 5,
**dadurch gekennzeichnet,**
**dass** es sich bei dem überkritischen Medium um überkritisches Kohlendioxid handelt.

7. Verfahren nach Anspruch 6,
**dadurch gekennzeichnet,**
**dass** die antimikrobiellen Polymere aus mindestens einem der folgenden Monomere hergestellt wurden:
Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylaminopropylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammoniumchlorid, 2-Methacryloyloxyethyltrimethylammoniumchlorid, 2-Acryloyloxyethyl-4-benzoyldimethylammoniumbromid, 2-Methacryloyloxyethyl-4-benzoyidimethylammoniumbromid, Allyltriphenylphosphoniumbromid, Allyltriphenylphosphoniumchlorid, 2-Acrylamido-2-methyl-1-propansulfonsäure, 2-Diethylaminoethylvinylether und/oder 3-Aminopropylvinylether.

8. Verfahren nach Anspruch 7,
**dadurch gekennzeichnet,**
**dass** das überkritische Medium bei einem Druck von 50-500 bar und einer Temperatur von 10 °C bis 150 °C eingesetzt wird.
